## Europäisches Patentamt
## European Patent Office
## Office européen des brevets

(11) Veröffentlichungsnummer: **0 013 298**
**A2**

(12) **EUROPÄISCHE PATENTANMELDUNG**

(21) Anmeldenummer: **79103994.4**

(22) Anmeldetag: **16.10.79**

(51) Int. Cl.³: **G 05 D 23/19**
**B 60 H 1/00**

(30) Priorität: **14.11.78 DE 2849275**

(43) Veröffentlichungstag der Anmeldung:
**23.07.80 Patentblatt 80/15**

(84) Benannte Vertragsstaaten:
**DE FR GB IT SE**

(71) Anmelder: **ROBERT BOSCH GMBH**
**Postfach 50**
**D-7000 Stuttgart 1(DE)**

(72) Erfinder: **Schnaibel, Gerhard, Dipl.-Ing.**
**Hochstetterstrasse 25**
**D-7251 Hemmingen(DE)**

(72) Erfinder: **Junginger, Erich**
**Seyfferstrasse 75**
**D-7000 Stuttgart 1(DE)**

(54) Regeleinrichtung zum Klimatisieren des Innenraums von Fahrzeugen, insbesondere Kraftfahrzeugen.

(57) Es wird eine Regeleinrichtung zum Klimatisieren des Innenraums von Fahrzeugen, insbesondere Kraftfahrzeugen, mit einer sehr hohen Regelgenauigkeit angegeben, die unabhängig von der im Sommer- und Winterbetrieb unterschiedlichen, durchschnittlichen Oberflächentemperatur des Wärmetauschers ist. Hierzu ist der die Oberflächentemperatur des Wärmetauschers erfassende Tauscherfühler an dem Eingang des Soll-/Istwert-Vergleichers des Reglers dynamisch angekoppelt, derart, daß die zeitliche Änderung seiner Ausgangsgröße eine Eingangsgröße für den Vergleicher bildet. Der die Innenraumtemperatur erfassende Raumfühler ist nach wie vor statisch an den Eingang des Istwert-Vergleichers angeschlossen. Die dynamische Ankopplung erfolgt über einen Koppelkondensator.

Eine Ausführungsform der Regeleinrichtung sieht eine sog. Zweikanal-Steuerung für zwei voneinander unabhängige Wärmetauscher vor. Hier hat der Regler einen einzigen Soll-/Istwert-Vergleicher und zwei die Stellglieder für die Wärmetauscher steuernde Regelglieder. Jedem Wärmetauscher ist ein gesonderter Sollwertgeber zugeordnet. Neben der Verbindung mit dem Ausgang des Vergleichers sind die Regelglieder zusätzlich mit den Sollwertgebern kreuzweise derart gekoppelt, daß die Verstellung des dem einen Wärmetauscher zugeordneten Sollwertgebers eine durch diese Verstellung hervorgerufene Änderung der Ausgangsgröße des Vergleichers an dem dem anderen Wärmetauscher zugeordneten Regelglied wirkungslos macht.

Fig. 1

Croydon Printing Company Ltd.

- 1 -

R.

31.10.1978 Vo

ROBERT BOSCH GMBH, 7000 Stuttgart 1

Regeleinrichtung zum Klimatisieren des Innenraums
von Fahrzeugen, insbesondere Kraftfahrzeugen

Stand der Technik

Die Erfindung geht aus von einer Regeleinrichtung zum
Klimatisieren des Innenraums von Fahrzeugen, insbesondere Kraftfahrzeugen, nach der Gattung des Hauptanspruchs.

Bei einer bekannten Regeleinrichtung dieser Art sind
Raumfühler und Tauscherfühler so ausgebildet, daß bei
gleichen Temperaturänderungen der Raumfühler eine wesentlich größere Ausgangsgröße erzeugt, als der Tauscherfühler. Die Ausgangsgrößen beider Fühler werden
summiert und beaufschlagen als Ist-Wert den Soll-/Ist-
wert-Vergleicher. Die beiden Fühler besitzen
also hinsichtlich ihres Einflusses auf den Regler unterschiedliche Wertigkeit. Das Verhältnis der Wertigkeiten
beträgt üblicherweise 1:5 bis 1:8. Diese unterschiedliche Wertigkeit ist wesentlich für die Stabilität des Regelkreises. Wird der Tauscherfühler zu gering bewertet oder gar weggelassen, so wird der Raumfühler quasi allein wirksam, was ein instabiles Regelverhalten mit stark periodischen Abweichungen vom Sollwert hervorruft.

Der Einfluß des Tauscherfühlers führt aber immer zu statischen Regelabweichungen, die bei den im Winterbetrieb am Wärmetauscher erforderlichen hohen Temperaturen zum Heizen des Fahrzeuginnenraums unzulässig groß werden. Durch die Addition der beiden Ausgangsgrößen der Fühler kommt es nämlich mit steigendem Sollwert zu einer relativen Verringerung der tatsächlich erzielten Innenraumtemperatur, weil die von dem Raumfühler erfaßte Regelgröße immer schwächer durch die wegen der erforderlichen höheren Wärmetauschertemperatur steigende Ausgangsgröße des Tauscherfühlers ins Gewicht fällt. Dies sei an einem Beispiel erläutert:

Im Sommer beträgt im Durchschnitt die Tauschertemperatur ca. 20°C. Im Winter hingegen hat der Wärmetauscher eine Oberflächentemperatur von ca. 60°C. Es sei angenommen, daß der Tauscherfühler und der Raumfühler ein Wertigkeitsverhältnis von 1:5 haben, d.h. bei einer Temperaturänderung von 1°C ist die Ausgangsgröße des Raumfühlers fünfmal größer als die des Tauscherfühlers. Ändert sich nunmehr die Temperatur am Wärmetauscher von 20°C auf 60°C, also um 40°C, so hat dies bei dem angenommenen Wertigkeitsverhältnis die gleiche Wirkung auf die Regeleinrichtung, als wenn der Raumfühler eine ca. um 8°C höhere Innenraumtemperatur erfaßt. Dem Regler wird bei gleich eingestelltem Sollwert ein um 8°C höherer Istwert vorgetäuscht. Wenn also der Regler im Sommerbetrieb, d.h. bei 20°C Oberflächentemperatur des Wärmetauschers, exakt den eingestellten Sollwert einregelt, so wird sich im Winterbetrieb, also bei 60°C Oberflächentemperatur des Wärmetauschers, bei dem gleichen Sollwert eine bleibende, statische Regelabweichung von 8°C ergeben. Diese statische Regelabweichung nimmt noch mit steigendem Sollwert zu.

Dieses weiche Regelverhalten der bekannten Regeleinrichtung ist nicht befriedigend, insbesondere nicht in Fahrzeugen, die für Länder mit extremen Temperaturen bestimmt sind. Wie vorstehend schon aufgezeigt, kann aber der Tauscherfühler nicht gänzlich weggelassen oder sein Einfluß auf den Regler noch weiter abgeschwächt werden, da dies zu einem instabilen Regelverhalten führt.

Vorteile der Erfindung

Die erfindungsgemäße Regeleinrichtung mit den kennzeichnenden Merkmalen des Hauptanspruchs hat demgegenüber den Vorteil einer sehr hohen Regelgenauigkeit, da die Temperatur des Wärmetauschers statisch gesehen keinen Einfluß auf den Regler nimmt und der Tauscherfühler nur zur Stabilisierung des Reglers dient. Unabhängig von der Oberflächentemperatur wird immer die von dem Sollwertgeber vorgegebene, gewünschte Temperatur eingestellt. Die Regeleinrichtung arbeitet im Sommer- und im Winterbetrieb mit gleicher Regelgenauigkeit.

Durch die in den Unteransprüchen aufgeführten Maßnahmen sind vorteilhafte Weiterbildungen und Verbesserungen der im Hauptanspruch angegebenen Regeleinrichtung möglich.

Besonders vorteilhaft ist dabei die Ausführungsform gemäß Anspruch 5. Diese Ausführungsform ermöglicht eine sog. Zweikanal-Regelung, bei welcher zwei Wärmetauscher

- 4 -

unabhängig voneinander beeinflußt werden können, um somit beispielsweise auf der Fahrerseite des Fahrzeugs eine andere Temperatur einzustellen als auf der Beifahrerseite.

Grundsätzlich ist es möglich, die bekannte Regeleinrichtung der eingangs genannten Art auch als eine ebensolche Zweikanal-Regeleinrichtung mit zwei getrennten Wärmetauschern auszuführen. Hier müßten zwei komplette Regelkreise, jeweils einer für einen Wärmetauscher, vorgesehen werden. Zur Vereinfachung können die sich dabei ergebenden beiden Raumfühler zu einem einzigen Raumfühler zusammengefaßt werden, da die beiden Regelkreise ohnehin über die Innenraumtemperatur verkoppelt sind. Die Ausführungsform gemäß Anspruch 5 hat demgegenüber den vorstehend beschriebenen Vorteil der dynamischen Ankopplung der Tauscherfühler und die damit verbundenen positiven Eigenschaften. Außerdem benötigt diese Regeleinrichtung für zwei getrennte Wärmetauscher nur einen einzigen Ist-/ Sollwert-Vergleicher im Regler und weist mehr Freiheitsgrade bezüglich der mit den Wärmetauschern erzielbaren Temperaturunterschiede auf.

Besonders zweckmäßig sind auch die Ausführungsformen der Erfindung gemäß den Ansprüchen 6 und 8. Dadurch wird ein einfacher schaltungstechnischer Aufbau des Reglers mit relativ wenigen elektrischen Bauelementen erzielt.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen. Alle diese Anspruchsmerkmale haben jedoch dadurch als an

- 5 -

dieser Stelle ausdrücklich und erfindungswesentlich offenbart zu gelten.


Zeichnung


Die Erfindung ist anhand von zwei in der Zeichnung dargestellten Ausführungsbeispielen in der nachfolgenden Beschreibung näher erläutert. Es zeigen

Fig. 1          den Schaltplan einer Regeleinrichtung gemäß einem ersten Ausführungsbeispiel,

Fig. 2          den Schaltplan einer Regeleinrichtung gemäß einem zweiten Ausführungsbeispiel,

Fig. 3          eine schematische Darstellung der Anordnung von Teilen der Regeleinrichtung gemäß Fig. 2 in einem Kraftfahrzeug.


Beschreibung der Ausführungsbeispiele


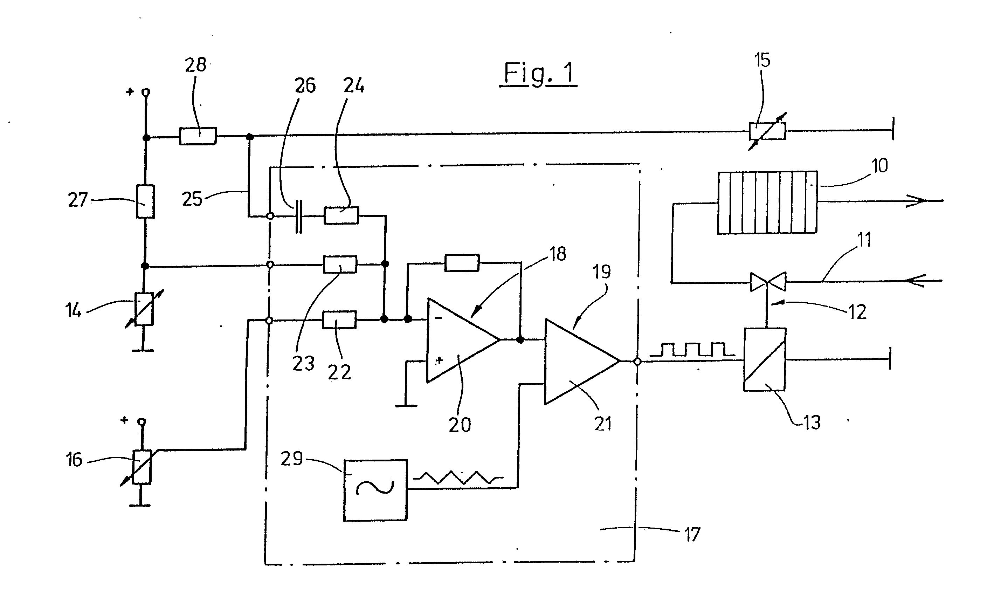

Die in Fig. 1 dargestellte Regeleinrichtung zum Klimatisieren des Innenraums eines Fahrzeuges weist einen Wärmetauscher 10 auf, der von einem Medium, z.B. dem Motorkühlwasser, durchströmt wird. Die Wärme bzw. Kälte des Mediums wird an die Umgebung des Wärmetauschers 10 oder einen diesen beaufschlagenden Luftstrom abgegeben. Der Mediumstrom, der schematisch in Fig. 1 angedeutet und mit 11 bezeichnet ist, wird von einem Stellglied 12, das z.B. als ein an sich bekanntes Magnetventil mit einem magnetischen

- 6 -

Stellantrieb 13 ausgebildet ist, gesteuert. Entsprechend
der Stellung des Stellgliedes 12 fließt ein mehr oder weniger großer Mediumstrom 11 durch den Wärmetauscher 10.

Die Regeleinrichtung weist ferner einen die Innenraumtemperatur erfassenden Raumfühler 14, einen die Temperatur an oder nahe der Oberfläche des Wärmetauschers 10
erfassenden Tauscherfühler 15, einen auf eine gewünschte
Innenraumtemperatur einstellbaren Sollwertgeber 16 und
einen Regler 17 auf. Der Regler 17 hat einen Soll-/Ist-
wert-Vergleicher 18, im folgenden kurz Vergleicher 18
genannt, der von den beiden Fühlern 14, 15 und dem Sollwertgeber 16 beaufschlagt ist und eine der Differenz von
Soll- und Istwert proportionale Ausgangsgröße erzeugt.
Ferner weist der Regler 17 ein Regelglied 19 auf, das
das Stellglied 12 in Abhängigkeit von der Ausgangsgröße
des Vergleichers 18 steuert. In Fig. 1 ist der Vergleicher 18 als Differenzverstärker, und zwar als Addierverstärker 20, ausgebildet, während das Regelglied 19 von
einem Komparator 21 gebildet ist. Der invertierende Eingang des Addierverstärkers 20 ist über je einen Widerstand 22 - 24 mit dem Sollwertgeber 16, dem Raumfühler 14
und dem Tauscherfühler 15 verbunden. Der Tauscherfühler 15
ist dabei mittels eines in die Verbindungsleitung 25
zwischen Tauscherfühler 16 und invertierenden Eingang
des Addierverstärkers 20 eingeschalteten Koppelkondensators 26 dynamisch an den Eingang des den Vergleicher 18
bildenden Addierverstärkers 20 angekoppelt. Die dynamische Ankopplung bedeutet, daß nur zeitliche Änderungen
der Ausgangsgröße des Tauscherfühlers eine Eingangsgröße
für den Vergleicher 18 bzw. den Addierverstärker 20 bildet. Die Fühler 14 und 15 sind als NTC-Widerstände ausgebildet, die über je einen Widerstand 27 und 28 an eine
Gleichspannungsquelle angeschlossen sind. Diese Gleichspannungsquelle ist in Fig. 1 durch ein "+" und durch das Erdpotentialsymbol gekennzeichnet. Der Sollwertgeber 16 wird
von einem an diese Gleichspannungsquelle angeschlossenen
Potentiometer gebildet. Der Potentiometerabgriff des
Potentiometers 16 ist mit dem invertierenden Eingang des
Addierverstärkers 20 verbunden.

Der Ausgang des Vergleichers 18 bzw. Addierverstärkers
20 ist mit dem einen Eingang des Komparators 21 verbunden, mit dessen anderem Eingang ein Wechselspannungsgenerator
verbunden ist. Dieser Wechselspannungsgenerator erzeugt
eine Wechselspannung konstanter Frequenz und dreieckförmigem Spannungsverlauf. Der Ausgang des Komparators 21
ist mit dem Stellglied 12, und bei als Magnetventil ausgebildetem Stellglied 12, mit der Erregerspule des magnetischen Stellantriebs 13 verbunden, die andererseits
an Erdpotential gelegt ist.

Die Regeleinrichtung arbeitet im wesentlichen wie folgt:
Entsprechend der Abweichung der Summe aus der Ausgangsgröße des Raumfühlers 14 und der zeitlichen Änderung der
Ausgangsgröße des Tauscherfühlers 15 von der Ausgangsgröße des Sollwertgebers 16, also dem Sollwert, stellt
sich am Ausgang des Addierverstärkers 20 eine dieser
Regelabweichung proportionale Spannung ein, die dem Komparator 21 zugeführt wird. Der Regler 17 arbeitet dabei
als P-Regler. Zusammen mit der Dreieckspannung wird vom
Komparator 21 eine Rechteckimpulsfolge erzeugt, die die
gleiche Frequenz wie die Dreieckspannung, aber eine mit
der Ausgangsspannung des Addierverstärkers 20 variable
Impulsbreite hat. Entsprechend diesen Impulsen wird das
Stellglied 12 getaktet betätigt, d.h. entweder in eine
Auf- oder eine Zu-Stellung gebracht, wobei die Öffnungszeiten abhängig von der Regelabweichung sind. Entsprechend wird auch dem Wärmetauscher 10 eine genau dosierte Menge
des Mediums zugeführt.

Die Spannung am Ausgang des Addierverstärkers 20 genügt
der Bedingung

$$U_{20} = V_{14} \left( \vartheta_{16} - \vartheta_{14} \right) - \frac{V_{15} p \cdot R_{24} C_{26}}{1 + p \, R_{24} \, C_{26}} \, 15 \qquad (1) \, ,$$

wobei

$U_{20}$ = Ausgangsspannung des Addierverstärkers 55,

$V_{14}$ = Verstärkung des Raumfühlers 14,

$V_{15}$ = Verstärkung des Tauscherfühlers 15,

$\vartheta_{14}$ = Temperatur des Raumfühlers 14 in °K,

$\vartheta_{15}$ = Oberflächentemperatur des Wärmetauschers 10 in °K,

$\vartheta_{16}$ = Sollwert-Temperatur in °K,

$R_{24} \cdot C_{26}$ = Koppelzeitkonstante des Widerstandes 24 und Kondensators 26.

Die Koppelzeitkonstante beträgt ca. 30 Sekunden.

Aus dieser Gleichung ist ersichtlich, daß statisch gesehen nur die Innenraumtemperatur geregelt wird und die
Temperatur des Wärmetauschers 10 letztlich verschwindet.
So bestimmt einzig und allein die von dem Raumfühler 14
erfaßte Innenraumtemperatur die Regelabweichung und wird
von dem Regler 17 ausgeregelt.

Durch die Wahl der Bandbreite der Dreieckspannung wird
ein etwa proportionaler Regelbereich bestimmt. Überschreitet oder unterschreitet die Ausgangsspannung des Addier-

verstärkers 20 den Spannungsbereich dieser Dreieckspannung, so tritt am Ausgang des Komparators 21 keine Impulsfolge mehr auf, sondern der maximale oder minimale Sättigungswert. Entsprechend bleibt das Stellglied 12, solange die Ausgangsgröße des Raumfühlers 14 unterhalb des Sollwerts des Sollwertgebers 16 und die Ausgangsspannung des Addierverstärkers 20 unterhalb des Dreieckspannungsbereichs liegt, so eingestellt, daß der maximale Mediumstrom 11 durch den Wärmetauscher 10 fließen kann. Im anderen Extremfall ist der Mediumstrom 11 völlig unterbrochen.

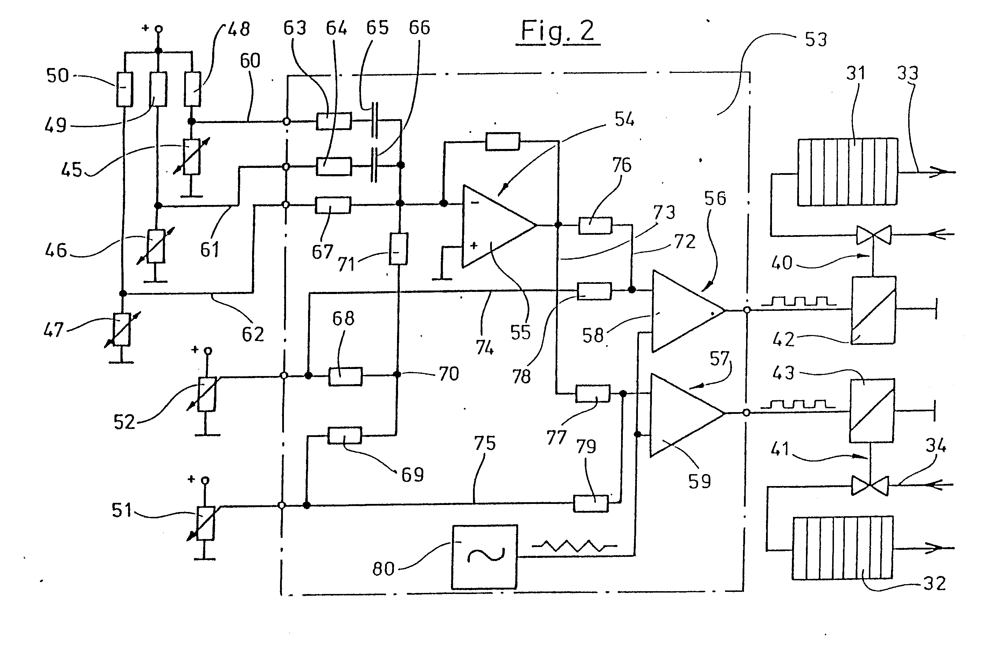

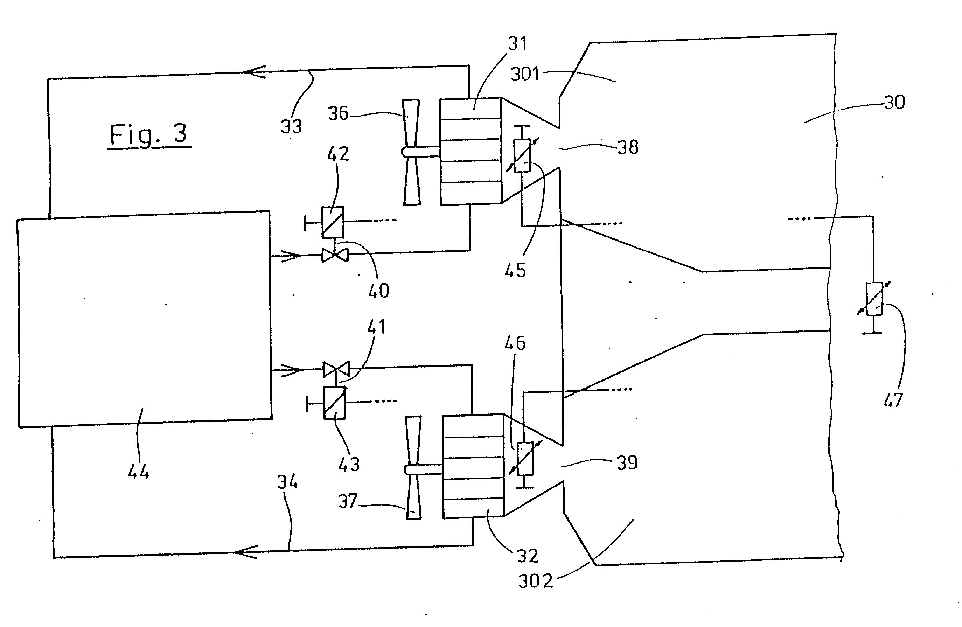

Die Regeleinrichtung zum Klimatisieren des Innenraums 30 eines Kraftfahrzeuges gemäß Fig. 2 und 3 ist als Heizeinrichtung ausgebildet. Es sind zwei voneinander getrennte Wärmetauscher 31 und 32 vorgesehen, die jeweils von dem Medium, hier das Motorkühlwasser, durchströmt werden. Der Kühlwasserkreislauf für den Wärmetauscher 31 ist mit 33 und der für den Wärmetauscher 32 mit 34 gekennzeichnet. Die Strömungsrichtung ist durch die Pfeile angedeutet. Mittels eines Ventilators 36 bzw. 37 - oder durch den Fahrtwind des Kraftfahrzeuges - wird ein Luftstrom erzeugt, der über die Wärmetauscher 31 und 32 durch Eintrittsöffnungen 38, 39 in den Innenraum 30 gelangt, und zwar vorzugsweise in den Fußraum 301 des Beifahrers bzw. 302 des Fahrers (Fig. 3).

In dem Kühlwasserkreislauf 33 bzw. 34 ist jeweils ein Stellglied 40 bzw. 41 angeordnet, das vorzugsweise wiederum als Magnetventil mit magnetischem Stellantrieb 42 bzw. 43 ausgebildet ist. Mit 44 ist der Motor des Kraftfahrzeugs bezeichnet.

Die Regeleinrichtung weist ferner zwei Tauscherfühler 45 und 46 auf, die jeweils an oder nahe der Oberfläche der Wärmetauscher 31 bzw. 32 angeordnet sind. Ferner ist ein einziger Raumfühler 47 vorgesehen, der vorzugsweise in Kopfhöhe der Fahrzeuginsassen angeordnet ist und hier die Innenraumtemperatur erfaßt. Wie in Fig. 2 dargestellt, sind die Fühler 45 - 47 als NTC-Widerstände ausgebildet, die über je einen weiteren Widerstand 48, 49, 50 an eine Gleichspannungsquelle angeschlossen sind, die durch "+" und dem Erdpotential-Symbol gekennzeichnet ist. Die Fühler 45 - 47 können aber auch als Siliciumdioden ausgebildet sein. In der Regeleinrichtung sind ferner zwei Sollwertgeber 51 und 52 vorgesehen, die jeweils einem der Wärmetauscher 31 bzw. 32 zugeordnet sind und jeweils getrennt für einen der Wärmetauscher 31 bzw. 32 eingestellt werden können. Dies bedeutet, daß die Oberflächentemperatur des einen Wärmetauschers abweichend von der Oberflächentemperatur des anderen Wärmetauschers eingestellt werden kann, wodurch beispielsweise der Beifahrer die Temperatur der durch die Eintrittsöffnung 38 in seinen Fußraum 301 eindringenden Heizluft anders einstellen kann, als auf der Fahrerseite. Der Beifahrer hat lediglich den auf seiner Seite angeordneten und dem Wärmetauscher 31 zugeordneten Sollwertgeber 51 entsprechend einzustellen.

Der Regler 53 weist einen einzigen Soll-/Istwert-Vergleicher 54 auf, der ebenso wie in dem Ausführungsbeispiel gemäß Fig. 1 als Differenzverstärker, und zwar als Addierverstärker 55 ausgebildet ist. Der Regler 53 hat weiterhin zwei Regelglieder 56 und 57, die jeweils einem der Wärmetauscher 31 und 32 zugeordnet sind und jeweils den Stellantrieb 40 bzw. 41 steuern. Beide Regelglieder 56 und 57 sind als Komparatoren 58 und 59 ausgebildet.

Das Regelglied 56 bzw. der Komparator 58 ist dem Wärmetauscher 31 zugeordnet und steuert dessen Stellantrieb 40, während das Regelglied 57 bzw. der Komparator 59 dem Wärmetauscher 32 zugeordnet ist und dessen Stellglied 41 betätigt. An dem invertierenden Eingang des Addierverstärkers 55 sind über die Verbindungsleitungen 60 - 62 die Tauscherfühler 45 und 46 dynamisch und der Raumfühler 47 statisch angekoppelt, wobei in den Verbindungsleitungen 60 bzw. 61 jeweils ein Widerstand 63 bzw. 64 und ein Koppelkondensator 65 bzw. 66 angeordnet sind. Ein Widerstand 67 ist in der Verbindungsleitung 62 angeordnet.

Die als Potentiometer ausgebildeten und an die Gleichspannungsquelle angeschlossenen Sollwertgeber 51 und 52 sind mit dem invertierenden Eingang des Addierverstärkers 55 verbunden. Dabei sind Sollwertgeber 51 und 52 derart miteinander verbunden, daß an den invertierenden Eingang des Addierverstärkers 55 ein dem Mittelwert der beiden Ausgangsgrößen der Sollwertgeber 51 und 52 entsprechender Sollwert gelangt. Hierzu sind die Potentiometerabgriffe der Sollwertgeber 51 und 52 über je einen Widerstand 68 und 69 miteinander verbunden und der Verbindungspunkt 70 über einen Widerstand 71 an den invertierenden Eingang des Addierverstärkers 55 angeschlossen.

Die Regelglieder 56 und 57 bzw. die Komparatoren 58 und 59 sind nunmehr derart kreuzweise mit den Sollwertgebern 52 bzw. 51 gekoppelt, daß die Verstellung des dem einen Wärmetauschers, z.B. 31, zugeordneten Sollwertgebers 51 eine durch diese Verstellung hervorgerufene Änderung der Ausgangsgröße des Vergleichers 54 bzw. Addierverstärkers 55 an dem das Stellglied 41 des anderen Wärmetauschers 32 steuernden Regelglied 57 bzw. Komparator 59 wirkungslos macht. Das gleiche gilt umgekehrt für den Sollwertgeber
52, der dem Wärmetauscher 32 zugeordnet ist. Dies geschieht am einfachsten dadurch, wie in Fig. 2 dargestellt
ist, daß die Regelglieder 56 und 57 bzw. Komparatoren 58
und 59 jeweils mit ihrem mit dem Vergleicher 54 bzw. Addierverstärker 55 verbundenen Eingang an jeweils einem der
Sollwertgeber 52 bzw. 51 derart angeschlossen sind, daß
die Verstellung des einen Sollwertgebers, z.B. 52, eine Kompensationsgröße erzeugt, welche die durch diese Verstellung bewirkte Änderung der Ausgangsgröße des Addierverstärkers 55 an dem Eingang
des mit diesem Sollwertgeber 52 verbundenen
Komparators 58 kompensiert. Hierzu sind die über
die Verbindungsleitungen 72 bzw. 73 mit dem Ausgang des
Addierverstärkers 55 verbundenen Eingänge der Komparatoren 58 bzw. 59 über Verbindungsleitungen 74 bzw. 75 an
die Sollwertgeber 52 bzw. 51, und zwar jeweils unmittelbar an die Potentiometerabgriffe, angeschlossen. In den
Verbindungsleitungen 72, 73, 74 und 75 ist jeweils ein
Widerstand 76 - 79 angeordnet. Diese Widerstände sind
in ihrem Widerstandswert nunmehr so bemessen, daß bei
einer Spannungsänderung an dem Potentiometer 52 - durch
dessen Verstellung - die Summenspannung am Eingang des
Komparators 58, die ja die Schaltspannung für diesen
Komparator 58 bildet, konstant bleibt und daß bei einer
Spannungsänderung an dem Potentiometer 51 - durch dessen
Verstellung - die Summenspannung an dem mit diesem Potentiometer 51 verbundenen Eingang des Komparators 59, die
ebenfalls die Schaltspannung des Komparators bildet,
konstant bleibt. Die Schaltspannung $U_S$ an den Eingängen
der Komparatoren 58 und 59 genügt der Bedingung

$$U_S = U_{55} \, (1-q) + q \cdot U_{Soll} \qquad (2),$$

wobei

$U_{55}$ = Ausgangsspannung des Addierverstärkers 55,

$U_{Soll}$ = Ausgangsspannung des jeweils mit dem anderen Komparator verbundenen Potentiometers 51 bzw. 52,

$q$ = das Widerstandsverhältnis der Widerstände 76 und 78 bzw. 77 und 79.

q ist nunmehr so gewählt, daß die vorstehend beschriebene Änderung der Ausgangsspannung $U_{55}$ des Addierverstärkers 55, die bei Änderung der Einstellung eines Sollwertgebers 51 bzw. 52 auftritt, an dem jeweils dem anderen Wärmetauscher 31, 32 zugeordneten Komparator 58 bzw. 59 kompensiert wird. Für die Schaltspannung des Komparators 58 gilt somit

$$U_{S58} = U_{55} (1 - q) + q \cdot U_{52} \qquad (3)$$

und für die Schaltspannung des Komparators 59

$$U_{S59} = U_{55} (1 - q) + q \cdot U_{51} \qquad (4),$$

wobei

$U_{S58}$ = die Schaltspannung des Komparators 58,

$U_{S59}$ = Schaltspannung des Komparators 59,

$U_{51}$ = Spannung am Abgriff des Potentiometers 51,

$U_{52}$ = Spannung am Abgriff des Potentiometers 52.

Für die Ausgangsspannung $U_{55}$ des Addierverstärkers 55 gilt nach wie vor die zu dem Ausführungsbeispiel gemäß Fig. 1 angegebene Gleichung (1) mit entsprechender Anpassung der Indizes an die anders bezeichneten gleichartigen

- 14 -

Bauelemente und unter Berücksichtigung,daß dem Addierverstärker 55 der Mittelwert der beiden Sollwertgeber 51 und
52 und jeweils die zeitliche Änderung der Ausgangsgröße
von zwei Tauscherfühlern 45 und 46 zugeführt wird.

Die Regeleinrichtung arbeitet im wesentlichen folgendermaßen:
Gemäß der Einstellung der Sollwertgeber 51 und 52 wird
ein Sollwert gebildet, der dem Mittelwert der Ausgangsgrößen der beiden Sollwertgeber 51 und 52 entspricht.
Entsprechend der an dem invertierenden Eingang des
Addierverstärkers 55 anliegenden Differenz der Sollwertspannung  und der Summe der von den Fühlern 45 - 47 gelieferten Spannungen erzeugt der Addierverstärker 55 eine
Ausgangsspannung $U_{55}$. Für jeden Schwellwerteingang der
Komparatoren 56 und 57 wird nun mit Hilfe der Widerstände
76 - 79 eine Schaltspannung gemäß den Gleichungen (3) und
(4) erzeugt. Bei gleicher Sollwerteinstellung der Sollwertgeber 51 und 52 ist die Schaltspannung für beide
Komparatoren 58 und 59 die gleiche. Mit dem ebenfalls
wie in Fig. 1 mit den anderen Eingängen der Komparatoren
58 und 59 verbundenen Wechselspannungsgenerator  80, der
eine frequenzkonstante Wechselspannung mit dreieckförmigem Spannungsverlauf erzeugt,entsteht am Ausgang der Komparatoren 58 und 59 je eine Rechteckimpulsfolge
mit der gleichen Frequenz wie die Dreieckspannung, aber
mit der Schaltspannung der Komparatoren 58 und 59 variablen Impulsbreite. Diese Impulse takten, wie bereits in
Fig. 1 beschrieben, jeweils die Stellglieder 40 und 41
und steuern somit den Kühlwasserstrom vom Motor 44 durch
die Wärmetauscher 31 und 32.

Solange die Potentiometer 51 und 52 gleich eingestellt
sind, nehmen die Stellglieder 40 und 41 die gleiche

- 15 -

Stellung ein und die Oberflächentemperatur beider Wärmetauscher 31 und 32 ist etwa gleich groß, so daß durch
beide Eintrittsöffnungen 38 und 39 gleich temperierte
Heizluft in den Innenraum 30 einströmt.

Sobald nunmehr der Sollwertgeber 51 verstellt wird, z.B.
in Richtung höherer Innenraumtemperatur, so bedeutet
diese Erhöhung für den Addierverstärker 55 eine Erhöhung
des Sollwertes an seinem invertierenden Eingang um die
Hälfte der Verstellung des Sollwertgebers 51. Dadurch
erhöht sich die Ausgangsspannung $U_{55}$ des Addierverstärkers. Gemäß den Gleichungen (2) bis (4) ist nunmehr - wie
vorstehend ausführlich erläutert - durch die Wahl des
Faktors q eine Abstimmung möglich, die bewirkt, daß die
Spannungserhöhung am Ausgang des Addierverstärkers 55, die über
den Widerstand 77 an den Schaltspannungseingang des Komparators 59 gelangt, durch eine entsprechende Spannung
des Potentiometers 51 wieder kompensiert wird, so daß
sich die Schaltspannung am Eingang des Komparators 59
durch die Verstellung des Potentiometers 51 nicht ändert.
Damit ändert sich auch die Stellung des Stellgliedes 41
nicht und die Oberflächentemperatur des Wärmetauschers
32 bleibt bei unverändertem Kühlwasserstrom konstant.

Die Einstellung des Sollwertgebers 52 auf der Fahrerseite ist konstant geblieben. Durch die Veränderung des
Sollwertgebers 51 hat sich aber - wie vorstehend ausgeführt - die Ausgangsspannung $U_{55}$ des Addierverstärkers
55 erhöht. Diese Spannungsänderung bewirkt nun am Schaltspannungseingang des Komparators 58 eine Erhöhung der
Schaltspannung und damit eine Vergrößerung der Impulsbreite der am Ausgang des Komparators 58 entstehenden
Impulsfolge. Das Stellglied 40 wird in Richtung größeren
Öffnungsquerschnitts verstellt und eine größere Kühlwasser-

menge durchströmt den Wärmetauscher 31, so daß - wie gewünscht - die Oberflächentemperatur des Wärmetauschers 31
ansteigt und die Temperatur des durch die Eintrittsöffnung 38 eindringenden, vom Wärmetauscher 31 aufgeheizten
Luftstromes größer ist.

Wird der Sollwertgeber 52 verstellt, so läuft der gleiche
Vorgang ab, wie beschrieben, nur mit entsprechend vertauschten Komparatoren 58 und 59. Der Kühlwasserstrom
durch den Wärmetauscher 31 bleibt dabei konstant und
der durch den Wärmetauscher 32 wird, entsprechend der Verstellung des Sollwertgebers 52 in Richtung höherer und
niedrigerer Temperaturen, vergrößert oder vermindert.

-.-.-.-.-.-.-.-.-

0013298

R.
31.10.1978

ROBERT BOSCH GMBH, 7000 Stuttgart 1

Ansprüche

1. Regeleinrichtung zum Klimatisieren des Innenraums von
   Fahrzeugen, insbesondere von Kraftfahrzeugen, mit mindestens einem vom Medium, z.B. dem Motorkühlwasser,
   durchströmten Wärmetauscher, mit mindestens einem den
   Mediumstrom steuernden Stellglied, vorzugsweise Magnetventil, mit einem die Innenraumtemperatur erfassenden
   Raumfühler, mit mindestens einem die Temperatur an
   oder nahe der Oberfläche des Wärmetauschers erfassenden Tauscherfühler, mit mindestens einem auf eine gewünschte Innenraumtemperatur einstellbaren Sollwertgeber und mit einem Regler, der einen von den beiden
   Fühlern und dem Sollwertgeber beaufschlagten Soll-/
   Istwert-Vergleicher und mindestens ein in Abhängigkeit
   von der Ausgangsgröße des Soll-/Istwert-Vergleichers
   das Stellglied steuerndes Regelglied aufweist, d a -
   d u r c h   g e k e n n z e i c h n e t , daß der
   Tauscherfühler (15; 45, 46) an dem Eingang des Soll-/
   Istwert-Vergleichers (18; 54) dynamisch angekoppelt
   ist, derart, daß die zeitliche Änderung seiner Ausgangsgröße eine Eingangsgröße für den Soll-/Istwert-
   Vergleicher (18; 54) bildet.

2. Regler nach Anspruch 1, d a d u r c h   g e k e n n -
   z e i c h n e t , daß der Soll-/Istwert-Vergleicher
   (18; 54) als Differenzverstärker (20; 55) ausgebildet
   ist, der eingangsseitig mit den beiden, vorzugsweise

- 2 -

als NTC-Widerstände oder Siliciumdioden ausgebildeten
Fühlern (14, 15; 45 - 47) und dem vorzugsweise als
Potentiometer ausgebildeten Sollwertgeber (16; 51, 52),
vorzugsweise über je einen Widerstand (22 - 24; 63, 64,
67 - 69), verbunden ist, und daß in die Verbindungsleitung (25; 60, 61) von Tauscherfühler (15; 45, 46)
und Differenzverstärker (20; 55) ein Koppelkondensator
(26; 65, 66) eingeschaltet ist.

3. Regeleinrichtung nach Anspruch 2, d a d u r c h
   g e k e n n z e i c h n e t , daß der Differenzverstärker ein Addierverstärker (20; 55) ist, an dessen
   invertierendem Eingang die Verbindungsleitungen (25;
   60 - 62) zu den Fühlern (14, 15; 45 - 47) bzw. dem
   Sollwertgeber (16; 51, 52) angeschlossen sind.

4. Regeleinrichtung nach Anspruch 2 oder 3, d a d u r c h
   g e k e n n z e i c h n e t , daß das Regelglied (19;
   56, 57) als Komparator (21; 58, 59) ausgebildet ist,
   dessen einer Eingang mit dem Ausgang des Differenzverstärkers (20; 55), dessen anderer Ausgang mit einem
   Wechselspannungsgenerator (29; 80), vorzugsweise Dreiecksspannungsgenerator, und dessen Ausgang mit dem
   Stellglied (12; 40, 41) verbunden ist.

5. Regeleinrichtung nach einem der Ansprüche 1 - 4,
   d a d u r c h   g e k e n n z e i c h n e t , daß zwei
   Wärmetauscher (31, 32) mit jeweils zugeordnetem eigenständig   steuerbaren Stellglied (40, 41) und Tauscherfühler (45, 46) und ferner zwei den Wärmetauschern (31,
   32) zugeordnete Sollwertgeber (51, 52) vorgesehen sind,
   die jeweils getrennt für einen der Wärmetauscher (31,
   32) einstellbar sind, und daß der Regler (53) zwei jeweils einem Wärmetauscher (31, 32) zugeordnete, eingangsseitig mit dem Ausgang des Soll-/Istwert-Vergleichers (54) verbundene Regelglieder (56, 57) aufweist, die mit den Sollwertgebern (52, 51) kreuzweise derart gekoppelt sind, daß die Verstellung des dem einen Wärmetauscher (31, 32) zugeordneten Sollwertgebers (51, 52) eine durch diese Verstellung hervorgerufene Änderung der Ausgangsgröße des Soll-/Istwert-Vergleichers (54) an dem das Stellglied (41, 40) des anderen Wärmetauschers (32, 31) steuernden Regelglied (57,56 ) wirkungslos macht.

6. Regeleinrichtung nach Anspruch 5, d a d u r c h g e k e n n z e i c h n e t , daß die Regelglieder (56, 57) jeweils mit ihrem mit dem Soll-/Istwert-Vergleicher (54) verbundenen Eingang an jeweils einem der Sollwertgeber (52, 51) derart angeschlossen sind, daß die Verstellung des einen der Sollwertgeber (52, 51) eine die dadurch bewirkte Änderung der Ausgangsgröße des Soll-/Istwert-Vergleichers (54) kompensierende Kompensationsgröße an dem Eingang des mit diesem Sollwertgeber (52, 51) verbundenen Regelgliedes (56, 57) hervorruft.

7. Regeleinrichtung nach Anspruch 5 oder 6, d a d u r c h g e k e n n z e i c h n e t , daß die Sollwertgeber (51, 52) derart miteinander und mit dem Eingang des Soll-/Istwert-Vergleichers (54) verbunden sind, daß der Mittelwert ihrer Ausgangsgrößen als Sollwert an dem Soll-/Istwert-Vergleicher (54) anliegt.

8. Regeleinrichtung nach Anspruch 4 und einem der Ansprüche 5 - 7, d a d u r c h   g e k e n n z e i c h -
n e t ,  daß die als Potentiometer ausgebildeten Sollwertgeber (51, 52) über einen Widerstand (78, 79) an je einem der mit dem Differenzverstärker (55) verbundenen Eingänge der Komparatoren (58, 59) angeschlossen sind, daß in die Verbindungsleitungen (72, 73) zwischen dem Differenzverstärker (55) und den Komparatoren (58, 59) je ein Widerstand (76, 77) eingeschaltet ist und daß die Widerstände (76 - 79) in den Verbindungsleitungen (72 - 75) des Differenzverstärkers (54) und der Potentiometer (53, 51) mit den Komparatoren (58, 59) derart bemessen sind, daß bei einer Spannungsänderung an einem der Potentiometer (52, 51) die die Schaltspannung des Komparators (58, 59) bildende Summenspannung an dem Eingang des mit diesem Potentiometer (52, 51) verbundenen Komparators (58, 59) konstant bleibt.

9. Regeleinrichtung nach einem der Ansprüche 5 - 8, d a d u r c h   g e k e n n z e i c h n e t ,  daß die Wärmetauscher (31, 32) jeweils in einem in den Fahrzeug-Innenraum (30) eintretenden Luftstrom angeordnet sind und daß die Eintrittsöffnungen (38, 39) für die Luftströme im Innenraum (30) an räumlich entfernten Stellen, vorzugsweise jeweils im Fußraum (301, 302) des Fahrers und Beifahrers, angeordnet sind.

-.-.-.-.-.-.-.-.-

Fig. 1

0013298

Fig. 2

0013298

Fig. 3